Europäisches Patentamt

European Patent Office

Office européen des brevets

(19)

(11) Publication number: **0 025 780**
**B1**

(12)

# EUROPEAN PATENT SPECIFICATION

(45) Date of publication of patent specification: **07.09.83**

(51) Int. Cl.³: **B 01 J 2/30, C 05 G 3/00**

(21) Application number: **80850134.0**

(22) Date of filing: **12.09.80**

(54) **Anti-caking agent, a process for its preparation and its use.**

(30) Priority: **17.09.79 SE 7907704**

(43) Date of publication of application:
**25.03.81 Bulletin 81/12**

(45) Publication of the grant of the patent:
**07.09.83 Bulletin 83/36**

(84) Designated Contracting States: ,
**AT BE DE FR GB IT NL**

(56) References cited:
**FR - A - 1 314 559**
**FR - A - 2 088 387**
**FR - A - 2 126 427**
**FR - A - 2 155 883**
**FR - A - 2 313 974**
**FR - A - 2 350 872**
**LU - A - 60 247**

(73) Proprietor: **KenoGard AB**
**Box 11033**
**S-100 61 Stockholm (SE)**

(72) Inventor: **Rosenblom, Jan**
**Björkholmsvägen 188**
**S-132 00 Saltsjö-boo (SE)**

(74) Representative: **Schöld, Zaid**
**c/o KemaNobel AB Patents Box 11065**
**S-100 61 Stockholm (SE)**

Courier Press, Leamington Spa, England.

## Anti-caking agent, a process for its preparation and its use

The present invention relates to an agent for the treatment of products, which tend to cake, particularly for treatment of fertilizers, in order to make these products free-flowing and non-dusting. More particularly, the invention relates to such an agent, comprising both an inorganic material and organic compounds, and which agent is in the form of prills, granules or the like.

It is well-known to treat salts and fertilizers containing water-soluble salts to prevent their caking during storage, transport and handling. Anti-caking treatment can be carried out either with liquid or solid agents and in one or several steps. Different types of organic surface active compounds, such as fatty amines, salts of fatty amines, sulphonates etc. have since long been used for anti-caking treatment. Further inorganic powder materials such as talcum, lime and clay have been used to a great extent, as they are advantageous from an economical point of view, and these inorganic materials are generally used in combination with organic anti-caking agents. However, one disadvantage in using powders is, that they often give rise to serious dusting problems.

Several combinations of organic substances as anti-caking agents are known. For example, combinations of wax and a surface active agent, such as a fatty amine, are known and described in LU—A—60 247 and combinations of an oxyalkylated product and an anionic or cationic surface active agent is known from FR—A—2 126 427. Combinations of mineral powder and organic substances are also known. FR—A—2 155 883 describes an anti-caking agent comprising high amounts of mineral powder, surface active agent and an oil or a wax.

A method and an agent for anti-caking treatment, giving a considerable reduction of the dusting problems, have been suggested in the Swedish patent 348 116 (corresponding to FR—A—2 088 387), which discloses, a solid anti-caking agent comprising powder material and hydrophobing organic compounds, where the material is completely mixed into the organic phase and the mixture is converted to prills or granules. Amines have mainly been used as hydrophobing compounds in these agents.

According to the present invention, it has been found, that an agent with extremely satisfactory anti-caking effect, and which does not give rise to annoying dusting problems at handling or application, as it is in the form of prills or granules, is obtained by a combination of inorganic powder material and specific organic compounds in specific amounts. The agent of the invention contains certain alkoxylated compounds, and this gives a considerable increase of the anti-caking effect in comparison with previously known, solid anti-caking agents in a corresponding form. The inorganic powder material in the present agents is completely mixed into the organic phase and the composition is, by means of a special treatment step, converted into particle form, e.g. into prills or granules. Hereby an agent is obtained, which in itself is non-dusting, and thus can be handled, transported and applied without dust-problems. Products with a tendency to caking will, after treatment with the agents, show a clearly reduced tendency to dusting, compared with untreated products.

The agent according to the invention contains 20 to 60 per cent by weight of an inorganic powder material, 10 to 30 per cent by weight of a cationic amine or salts thereof, 5 to 35 per cent by weight of a wax, 0 to 20 per cent by weight of a fatty amide and 5 to 35 per cent by weight of alkoxylated primary aliphatic alcohols, having at least 12 carbon atoms, or alkylphenols, having at least 8 carbon atoms in the alkyl chain.

By the above given combination of specific components in specific amounts an agent is obtained, which gives surprisingly good anti-caking effect, and products treated with the agent have a considerably reduced tendency to dusting. The selected components and their amounts make a complete mixing of the inorganic material into the organic phase possible and further it makes the conversion of the composition into particle form possible and also gives a product, which is solid at room temperature.

In the present agents any known powder material can be used, e.g. kieselguhr, talcum, clays or mixtures thereof. The particle size of the powder material is not particularly important. It is, however, suitable that 50 per cent of the material has a diameter below 40 $\mu$m and preferably 50 per cent of the material has a diameter below 20 $\mu$m. A high content of inorganic material is, of course, preferable from an economical point of view. Too high contents may, however, give rise to problems at the production of the agents and to dusting, and thus the content should be within the range of 20 to 60 per cent by weight, and preferably within the range 35 to 50 per cent by weight, based on the total composition.

The organic phase of the agents comprises three different components, amines or amine salts, wax or a combination of wax and fatty amide and alkoxylated products. Of these components, the combination of amine products and the alkoxylated products contribute mainly to the anti-caking effect, while the waxes are of particular importance for the reduction of dusting. The anti-caking agent thus consists of 20 to 60 per cent by weight of inorganic material, 10 to 30 per cent by weight of wax or a mixture of waxes, 0 to 20 per cent by weight of a fatty amide and 5 to 35 per cent by weight of an alkoxylated aliphatic alcohol or an alkoxylated alkylphenol.

The cationic amines are present in the agents in amounts of 10 to 30 per cent by weight and the amines are monoamines or diamines of the general formula $RNH_2$ or $RNH(CH_2)_nNH_2$, wherein R is an aliphatic hydrophobic group, having at least 12 carbon atoms, suitably 12 to 24 carbon atoms, and n is 1—5, preferably 2, or salts thereof. The hydrophobic group can be straight or branched, saturated or unsaturated. R is suitably an alkyl group, containing 12 to 24 carbon atoms, and preferably 16 to 20 carbon atoms. Monoamines of above given formula, or salts thereof, are preferred. As examples of suitable amines can be mentioned tetradecylamine, hexadecylamine, octadecylamine and eicosylamine. Particularly suitable are the commercial amines, which comprise mixtures of amines, having varying carbon chain lengths, and which are obtained from different vegetable and animal fats and oils, for example from tallow. As examples of suitable salts of amines can be mentioned hydrochlorides, acetates and salts of the amines and fatty acids having about 6 to 22 carbon atoms, such as lauric acid and stearic acid.

The agents contain 5 to 35 per cent by weight of wax. As wax materials, it is possible to use polyolefins, such as polyethylene, natural or synthetic paraffin waxes, microcrystalline waxes and mixtures of such waxes. Part of the wax can also be replaced by fatty amides, i.e. amides having hydrophobic groups, corresponding to those mentioned for the amine material. Amides can hereby be present in a weight ratio of up to 2:1 with respect to the wax. The wax is selected with respect to the fact, that it will give a suitable viscosity for the following conversion of the total composition into prills or granules.

By alkoxylated products are understood condensation products between ethylene oxide, propylene oxide or butylene oxide, preferably ethylene oxide and propylene oxide or mixtures thereof, and alcohols or alkylphenol. The alcohols are alkoxylated primary aliphatic alcohols having at least 12 carbon atoms in the aliphatic group, suitably 12 to 24 carbon atoms, and preferably 16 to 20 carbon atoms. Alkyl groups are preferred. The alkylphenols contain alkyl groups, having at least 8 carbon atoms suitably 8 to 20 and preferably 8 to 12 carbon atoms. As examples of suitable phenols can be mentioned nonylphenol and octylphenol. The alkoxylated aliphatic alcohols are preferred. The amount of alkylene oxide groups is suitably within the range 15 to 120, and preferably within the range 20 to 100. 5 to 35 per cent by weight of alkoxylated products are present in the compositions.

The agents according to the invention can be prepared by mixing the components at a temperature above the melting point of the organic compounds, in order that an intimate molten-down mixture be obtained. The obtained mixture is thereafter converted to a particulate form, e.g. to granules, prills or pellets, e.g. by treatment in a granulator or spraying in a cooling tower for the formation of prills. At the blending of the components, colouring agents or fluorescent agents can, if desired, be introduced into the anti-caking agents. The obtained particulate anti-caking agents suitably have a diameter exceeding 0.4 mm.

The agents according to the invention are mainly used for treatment of fertilizers. Treatment of fertilizers with the anti-caking agents of the invention is suitably carried out at a temperature above the melting point for the agents, and the agents are suitably applied to warm fertilizers, in order that they will melt out on these, e.g. in a drum. It is, of course, also possible to apply the agents in other manners, it is e.g. possible to cover the inner side of the treating-drum, into which the fertilizer is introduced, with molten anti-caking agent. The amount of anti-caking agent required, in order to obtain a satisfactory effect, will, of course, vary with the composition of the fertilizers and their tendency to caking. Amounts within the range of 0.03 to 0.4 per cent by weight, based on the fertilizer, can for example be used. In most cases, amounts within the range of 0.08 to 0.20 per cent by weight are used.

Fertilizers, and other salts, treated with the present agents, have improved storage capability and reduced tendency to dusting, and, at the same time, the agents themselves do not give rise to dusting, and they can, thanks to their specific form, be handled and metered out in a simple manner.

The invention also relates to a process for the preparation of the agents and to the use of the agents in accordance with what has been said above, and as defined in the claims.

The invention is further illustrated in the following examples, which, however, are not intended to limit the same. Parts and per cent relate to parts by weight and per cent by weight, respectively, unless otherwise stated.

Example 1

A mixture of 10 per cent by weight of a fatty amine having a chain length of $C_{16-18}$, 30 per cent by weight of paraffin wax and 30 per cent by weight of an alcohol having a chain length of $C_{16-18}$ ethoxylated with 30 moles of ethylene oxide was melted in a reactor at 80°C during vigorous stirring. 30 per cent by weight of talcum were then added during continued stirring and the obtained mixture was at 80°C sprayed in a prilling tower. The droplets solidified during the free fall and prills having the following size distribution were obtained:

2—4 mm/18%, 1—2 mm/74%, 0.63—1 mm/7%, 0—0.63 mm/1%.

Example 2

2000 grams of NPK 15-15-15 fertilizer in

the form of granules were warmed to 85°C in a rotating bowl, whereafter 3.0 grams of anti-caking agent were added. The rotation was continued at a constant temperature for 10 minutes, and hereby the agents melted out completely and covered the granules with a thin layer.

The treated fertilizer was thereafter subjected to an accelerated storage test for 68 hours with programmed temperature variations between 35 and 38°C at a relative humidity, corresponding to the CRH (critical relative humidity) of the fertilizer under a pressure of 150 kPa, which corresponds to storage height of about 15 m. After storage the crush force, which is a direct measure of the caking tendency, was determined. The tendency to dusting of the treated fertilizer was determined by rotation of a sample of this in a drum for two minutes.

The anti-caking treatment was carried out with two different agents: a) a previously known agent in the form of small prills and consisting of 50% talcum and 50% fatty amines having a chain length of $C_{16-18}$, b) an agent according to the invention in the form of small prills and consisting of 45% talcum, 20% fatty amine having a chain length of $C_{16-18}$, 10% polyethylene wax and 25% of an aliphatic alcohol, having a carbon chain length of $C_{16}$ to $C_{18}$, ethoxylated with 30 moles ethylene oxide.

The results are shown in the Table below.

| Anti-caking agent | Crush force $N \cdot 10^1$ | Dusting mg/kg |
|---|---|---|
| Untreated NPK | 15.4 | 7 |
| Agent a | 4.6 | 7 |
| Agent b | 2.0 | 4 |

Example 3

2000 grams of NPK 15-15-15 fertilizer were treated with 3.0 grams of different anti-caking agents according to the invention in the form of small prills. The treatment and the tests were carried out in accordance with what is said in Example 1. Agents, having the following compositions, were tested:

a) 45% talcum, 15% fatty amine, 20% microcrystalline wax, 20% of an alcohol, having a chain length of $C_{16-18}$ ethoxylated with 30 moles ethylene oxide,

b) 20% talcum, 30% fatty amine, 15% microcrystalline wax, 35% of an alcohol, having a chain length of $C_{16-18}$ ethoxylated with 80 moles ethylene oxide,

c) 30% talcum, 10% fatty amine, 30% paraffin wax, 30% of an alcohol, having a chain length of $C_{16-18}$ ethoxylated with 30 moles ethylene oxide,

d) 45% talcum, 15% fatty amine, 20% of a mixture of microcrystalline wax and fatty amide, 20% of an alcohol, having a chain length of $C_{16-18}$ ethoxylated with 80 moles of ethylene oxide,

e) 45% talcum, 15% fatty amine, 20% of a mixture of microcrystalline wax and fatty amide, 20% of a nonylphenol ethoxylated with 50 moles ethylene oxide.

The fatty amine in all compositions had a chain length of $C_{16-18}$.

The results are shown in the Table below.

| Anti-caking agent | Crush force $N \cdot 10^1$ | Dusting mg/kg |
|---|---|---|
| Untreated NPK | 15.4 | 7 |
| Agent a | 2.7 | 2 |
| Agent b | 2.5 | 6 |
| Agent c | 2.7 | 4 |
| Agent d | 2.5 | 3 |
| Agent e | 3.7 | 2 |

**Claims**

1. Anti-caking agent, in the form of prills, granules or the like, based on inorganic powder material and hydrophobic organic compounds, characterized in, that it comprises 20 to 60 per cent by weight of inorganic powder, 10 to 30 per cent by weight of a cationic amine, having the general formula $RNH_2$ or $RNH(CH_2)_nNH_2$, wherein R is an aliphatic hydrophobic group, containing at least 12 carbon atoms, and n is 1—5, or a salt thereof, 5 to 35 per cent by weight of a wax, 0 to 20 per cent by weight of a fatty amide and 5 to 35 per cent by weight of an alkoxylated primary aliphatic alcohol, having at least 12 carbon atoms in the aliphatic group, or an alkoxylated alkylphenol, wherein the alkyl group contains at least 8 carbon atoms.

2. An agent according to claim 1, characterized in, that it comprises an amine of the general formula $RNH_2$, wherein R is an aliphatic hydrophobic group, having 12 to 24 carbon atoms, or a salt thereof.

3. An agent according to claim 1, characterized in, that it contains a condensation product between a primary aliphatic alcohol, having at least 12 carbon atoms in the aliphatic group, and 15 to 120 moles of ethylene oxide, propylene oxide or a mixture thereof.

4. A process for the preparation of an anti-caking agent in the form of prills, granules or the like, based on inorganic powder material and hydrophobic organic compounds, according to claim 1 by mixing the organic compounds and the inorganic powder at an elevated temperature and subsequently converting the mixture into particle form, characterized in, that 10 to 30 per cent by weight of a cationic amine, having the general formula $RNH_2$ or $RNH(CH_2)_nNH_2$, wherein R is an aliphatic hydrophobic group, having at least 12 carbon atoms, and n is 1—5, or a salt thereof, 5 to 35 per cent by weight of a wax, 0 to 20 per cent by weight of a fatty amide, and 5 to 35 per cent by weight of an alkoxylated primary aliphatic alcohol, having at least 12 carbon atoms in the aliphatic group, or an alkoxylated alkylphenol, where the alkyl group contains at least 8 carbon atoms, are mixed at a temperature exceeding the melting point of all the components, whereafter 20 to 60 per cent by weight of inorganic powder material are admixed in order to obtain an intimate molten-down mixture, which mixture is converted into particle form.

5. Use of an anti-caking agent according to claim 1 for treatment of fertilizers.

**Revendications**

1. Agent anti-agglutinant en forme de boulettes, de granules ou similaires, à base d'une matière pulvérulente minérale et de composés organiques hydrophobes, caractérisé en ce qu'il comprend entre 20 et 60% en poids de poudre minérale, entre 10 et 30% en poids d'une amine cationique de formule générale $RNH_2$ ou $RNH(CH_2)_nNH_2$, dans laquelle R est un groupe aliphatique hydrophobe contenant au moins 12 atomes de carbone et n est un nombre entre 1 et 5, ou d'un sel d'une telle amine, entre 5 et 35% en poids d'une cire, entre 0 et 20% en poids d'un amide gras et entre 5 et 35% en poids d'un alcool aliphatique primaire alcoxylé, ayant dans le groupe aliphatique au moins 12 atomes de carbone, ou un alkylphénol alcoxylé, dans lequel le groupe alkyle contient au moins 8 atomes de carbone.

2. Agent selon la revendication 1, caractérisé en ce qu'il comprend une amine de formule générale $RNH_2$, où R est un groupe aliphatique hydrophobe ayant de 12 à 24 atomes de carbone, ou un sel d'une telle amine.

3. Agent selon la revendication 1, caractérisé en ce qu'il contient un produit de condensation à partir d'un alcool primaire aliphatique, ayant dans son groupe aliphatique au moins 12 atomes de carbone, et de 15 à 120 moles d'oxyde d'éthylène, d'oxyde de propylène ou d'un mélange de ceux-ci.

4. Procédé pour la préparation d'un agent anti-agglutinant en forme de boulettes, de granules ou similaires, à base d'une matière pulvérulente organique et de composés organiques hydrophobes, défini dans la revendication 1 dans lequel on mélange les composés organiques et la poudre minérale à une température élevée et on met le mélange ensuite sous forme de particules, caractérisé en ce qu'on mélange entre 10 et 30% en poids d'une amine cationique, de formule générale $RNH_2$ ou $RNH(CH_2)_nNH_2$, où R est un groupe aliphatique hydrophobe, ayant au moins 12 atomes de carbone, et n est un nombre entre 1 et 5, ou d'un sel d'une telle amine, entre 5 et 35% en poids d'une cire, entre 0 et 20% en poids d'un amide gras et entre 5 et 35% en poids d'un alcool primaire aliphatique alcoxylé, ayant au moins 12 atomes de carbone dans le groupe aliphatique, ou un alkylphénol alcoxylé, où le groupe alkyle contient au moins 8 atomes de carbone, à une température supérieure au point de fusion de tous les ingrédients, ensuite on ajoute entre 20 et 60% en poids de poudre minérale afin d'obtenir un mélange intime fondu, après quoi on met le mélange en forme de particules.

5. Utilisation d'un agent anti-agglutinant selon la revendication 1 pour le traitement d'engrais.

**Patentansprüche**

1. Antibackmittel in Form von Prills, Körnchen oder dergleichen auf Basis eines anorganischen Pulvermaterials und hydrophober organischer Verbindungen, dadurch gekennzeichnet, dass es umfasst 20 bis 60 Gew.-% eines anorganischen Pulvers, 10 bis 30 Gew.-% eines kationischen Amins mit der allgemeinen Formel $RNH_2$ oder $RNH(CH_2)_nNH_2$, worin R eine aliphatische hydrophobe Gruppe mit mindestens 12 Kohlenstoffatomen ist und n ist 1 bis 5, oder ein Salz davon, 5 bis 35 Gew.-% eines Wachses, 0 bis 20 Gew.-% eines Fettamids und 5 bis 35 Gew.-% eines alkoxylierten primären aliphatischen Alkohols mit wenigstens 12 Kohlenstoffatomen in der aliphatischen Gruppe oder eines alkoxylierten Alkylphenols, worin die Alkylgruppe wenigstens 8 Kohlenstoffatome enthält.

2. Mittel gemäss Anspruch 1, dadurch gekennzeichnet, dass es ein Amin der allgemeinen Formel $RNH_2$, worin R eine aliphatische hydrophobe Gruppe mit 12 bis 24 Kohlenstoffatomen ist, oder ein Salz davon umfasst.

3. Mittel gemäss Anspruch 1, dadurch gekennzeichnet, dass es ein Kondensationsprodukt zwischen einem primären aliphatischen Alkohol mit mindestens 12 Kohlenstoffatomen in der aliphatischen Gruppe und 15 bis 120 Mol Äthylenoxid, Propylenoxid oder ein Gemisch davon enthält.

4. Verfahren zur Herstellung eines Antibackmittels in Form von Prills, Körnchen oder dergleichen auf Basis von anorganischem Pulvermaterial und hydrophoben organischen Verbindungen gemäss Anspruch 1 durch Vermischen der organischen Verbindungen und des anorganischen Pulvers bei einer erhöhten Temperatur und anschliessend Überführung der Mischung in Teilchenform, dadurch gekennzeichnet, dass 10 bis 30 Gew.-% eines kationischen Amins mit der allgemeinen Formel $RNH_2$ oder $RNH(CH_2)_nNH_2$, worin R eine aliphatische hydrophobe Gruppe mit mindestens 12 Kohlenstoffatomen ist und n 1 bis 5 ist oder ein Salz davon, 5 bis 35 Gew.-% eines Wachses, 0—20 Gew.-% eines Fettamids und 5 bis 35 Gew.-% eines alkoxylierten primären aliphatischen Alkohols mit mindestens 12 Kohlenstoffatomen in der aliphatischen Gruppe oder eines alkoxylierten Alkylphenols, worin die Alkylgruppe mindestens 8 Kohlenstoffatome enthält, vermischt werden bei einer Temperatur, welche den Schmelzpunkt aller Komponenten übersteigt, wonach 20 bis 60 Gew.-% eines anorganischen Pulvermaterials zugemischt werden, damit man eine innige zusammengeschmolzene Mischung erhält, welche in Teilchenform überführt wird.

5. Verwendung eines Antibackmittels gemäss Anspruch 1 zur Behandlung von Düngemitteln.